Europäisches Patentamt

European Patent Office

Office européen des brevets

(19)

(11) **EP 0 862 542 B1**

(12) **FASCICULE DE BREVET EUROPEEN**

(45) Date de publication et mention
de la délivrance du brevet:
**30.01.2002   Bulletin 2002/05**

(51) Int Cl.$^7$: **C04B 35/447**, C01B 25/37,
G21F 9/16

(21) Numéro de dépôt: **96939149.9**

(22) Date de dépôt: **19.11.1996**

(86) Numéro de dépôt international:
**PCT/FR96/01829**

(87) Numéro de publication internationale:
**WO 97/19034 (29.05.1997 Gazette 1997/23)**

(54) **PROCEDE DE FABRICATION DE COMPOSES DE TYPE MONAZITE DOPES OU NON EN ACTINIDES ET APPLICATION AU CONDITIONNEMENT DES DECHETS RADIOACTIFS RICHES EN ACTINIDES ET EN LANTHANIDES**

VERFAHREN ZUR HERSTELLUNG VON, MIT AKTINIDEN DOTIERTEN, ODER NICHT DOTIERTEN MONAZITZUSAMMENSETZUNGEN, UND DEREN VERWENDUNG ZUR KONDITIONIERUNG VON AKTINIDEN-ODER LANTHANIDEN REICHEN RADIOAKTIVEN ABFÄLLEN

METHOD FOR MAKING OPTIONALLY ACTINIDE-DOPED MONAZITE COMPOUNDS AND USE THEREOF FOR CONDITIONING ACTINIDE- AND LANTHANIDE-ENRICHED RADIOACTIVE WASTE

(84) Etats contractants désignés:
**BE CH DE ES GB LI SE**

(30) Priorité: **20.11.1995  FR 9513725**

(43) Date de publication de la demande:
**09.09.1998   Bulletin 1998/37**

(73) Titulaire: **COMMISSARIAT A L'ENERGIE ATOMIQUE
75015 Paris (FR)**

(72) Inventeurs:
 • **FIQUET, Olivier**
  **F-13770 Venelles (FR)**
 • **CROIXMARIE, Yves**
  **F-13100 Aix-en-Provence (FR)**

(74) Mandataire: **Des Termes, Monique et al
Société Brevatome 3, rue du Docteur Lancereaux
75008 Paris (FR)**

(56) Documents cités:
 **EP-A- 0 594 485       WO-A-94/05015
 US-A- 4 488 990**

 • **SCIENTIFIC BASIS FOR NUCLEAR WASTE MANAGEMENT,, vol. 3, - 20 Novembre 1980 pages 197-200, XP000577388 D.D.DAVIS ET AL.: "CRYSTAL CHEMISTRY AND PHASE RELATIONS IN THE SYNTHETIC MINERALS OF CERAMIC WASTE FORMS. II. STUDIES OF URANIUM-CONTAINING MONAZITES."**
 • **CHEMICAL ABSTRACTS, vol. 95, no. 24, 14 Décembre 1981 Columbus, Ohio, US; abstract no. 209064, R.J. FLORAN ET AL.: XP002012266 & R.J.FLORAN ET AL.: 31 Décembre 1981 , NTIS , SPRINGFIELD, VA, USA**
 • **CHEMICAL ABSTRACTS, vol. 116, no. 6, 10 Février 1992 Columbus, Ohio, US; abstract no. 43731v, page 127; XP000284700 & MINERALOGY JOURNAL, vol. 15, no. 6, - 31 Décembre 1991 pages 268-275, Y.HIKICHI ET AL.: "SYNTHESIS OF MONAZITE (RPO4......) BY SOLID STATE REACTION"**
 • **CHEMICAL ABSTRACTS, vol. 96, no. 4, 25 Janvier 1982 Columbus, Ohio, US; abstract no. 27678, J.G.PEPIN ET AL.: XP002012267 & ENERGY RES. ABSTRACTS. 1981. 6 (19), ABSTR NO. 29104.**

## Description

La présente invention concerne un procédé de fabrication de composés de type Monazite dopés ou non en Actinides selon les revendications 1 à 13.

La Monazite est un minéral naturel phosphaté, contenant un taux important de terres rares légères ainsi que quelques pour-cent d'uranium et de thorium. La formule chimique générale de ce minéral est $LnPO_4$ où Ln représente toute la série des terres rares légères du lanthane au terbium. Ce minéral est communément exploité comme source de terres rares.

Ce matériau fabriqué de manière synthétique peut avoir des applications intéressantes, en particulier dans le domaine des matériaux réfractaires et pour le conditionnement des déchets nucléaires.

Les voies de synthèse connues et couramment utilisées font réagir un ou plusieurs sels de terres rares avec un composé phosphaté.

Ainsi le document "MONAZITE" de L.A. BOATNER, J.C. SALES -Radioactive Waste Forms for the Future C. EWING p. 495-564 - ISBN 0-444-87104-7 (1988) décrit-il une synthèse de Monazite qui fait essentiellement intervenir le nitrate de cérium (III) hexahydraté de formule $Ce(NO_3)_3$, $6H_2O$ et l'hydrogénophosphate d'ammonium ou phosphate de diammonium $(NH_4)_2HPO_4$. Plus précisément, on décrit dans ce document la préparation de céramiques en orthophosphate de Lanthanide par précipitation à l'urée. Ce procédé de précipitation peut être appliqué à tout Lanthanide présent naturellement, mais on peut aussi préparer $YPO_4$ et $ScPO_4$ purs et dopés.

Le mélange d'oxydes de Lanthanide et d'oxydes d'Actinide, qui peut être constitué notamment par des déchets issus de l'industrie nucléaire, est tout d'abord dissous à chaud dans une solution aqueuse d'acide nitrique (1), puis on ajoute du nitrate de cérium $Ce(NO_3)_3$, $6H_2O$ (2), et de l'eau. On dissout ensuite dans cette solution de l'hydrogéno-phosphate d'ammonium $(NH_4)_2HPO_4$ (3) et on homogénéise le mélange (4). Une réaction de métathèse forme l'orthophosphate mixte Lanthanide-déchets, ces derniers étant composés essentiellement d'Actinides. On effectue ensuite à partir du mélange une précipitation (6) initiée par l'addition d'urée $NH_2-CO-NH_2$ (5) en grains, et par chauffage du mélange jusqu'à environ 180°C, jusqu'à ce que la précipitation (6) se produise.

De la vapeur d'eau, de l'azote, de l'ammoniac, de l'hydrogène et du gaz carbonique se dégagent suite à un chauffage à 400°C.

L'étape finale de production des poudres par cette technique comprend le transfert du matériau dans un creuset en céramique, par exemple en alumine et la calcination complète (7) de la poudre à 800°C.

Les poudres obtenues sont ensuite densifiées par un frittage sous charge (8).

La densité apparente des poudres obtenues est fortement dépendante de la quantité d'urée ajoutée lors de l'étape de précipitation contrôlée.

Ce document met également en évidence l'influence sur la densité apparente du rapport molaire urée/$CePO_4$.

Outre ce document, il existe de nombreuses publications qui ont trait à la synthèse des composés de type Monazite : ces synthèses se différencient essentiellement par les matières de départ utilisées : en effet, un grand nombre de sels de terres rares tels que carbonates, nitrates, oxalates, hydroxydes, et de composés phosphatés tels que acide orthophosphorique, hydrogénophosphates d'ammonium, phosphates alcalins sont possibles.

On peut également réaliser la synthèse par voie liquide, c'est-à-dire par précipitation et réaction, ou bien encore par synthèse hydrothermale, à savoir sous pression et à température élevée en milieu liquide.

Toutes ces voies de synthèse utilisent un rapport molaire Lanthanide/phosphore proche de 1, afin d'obtenir un composé final de type Monazite de formule $LnPO_4$ où Ln représente un élément de la série des Lanthanides du lanthane au terbium. En effet, au-delà de l'élément terbium dans la série des Lanthanides, et dans le sens des numéros atomiques croissants, une phase de structure différente, de type Xénotime, apparaît.

Ces procédés de synthèse, en particulier dans le cas du conditionnement de produits radioactifs font donc intervenir au moins quatre étapes plus ou moins faciles à maîtriser.

Il existe donc un besoin pour un procédé permettant de préparer la Monazite, ou plus généralement des composés de type Monazite, par un nombre réduit d'étapes, ces étapes présentant une complexité réduite et une mise en oeuvre aisée et faisant appel à des réactifs de départ économiques, facilement disponibles, et/ou pouvant être aisément synthétisés.

Dans le cas particulier de la synthèse de la Monazite faisant intervenir des réactifs qui proviennent de déchets radioactifs, afin de conditionner ces déchets en incluant les radioéléments dans la structure de la Monazite ou du composé de type Monazite, il serait également souhaitable de disposer d'un procédé qui présente également un nombre d'étapes réduites, faciles à mettre en oeuvre, le nombre d'étapes réalisées en milieu radioactif étant de plus maintenu à un minimum.

Les étapes réalisées en milieu radioactif doivent également présenter une complexité minimale et limiter les risques nucléaires liés à la criticité.

Ces objectifs et d'autres encore sont atteints selon l'invention par un procédé de fabrication ou de synthèse de la Monazite ou de composés de type Monazite dans lequel :

- on mélange en phase solide des réactifs comprenant un composé de type métaphosphate de Lanthanide de formule $Ln(PO_3)_3$ et un ou plusieurs oxyde(s) de Lanthanide et/ou un ou plusieurs oxyde(s) d'Actinide, ou un ou plusieurs composé(s) susceptible(s) de donner cet ou ces oxyde(s) lors du traitement thermique de frittage réaction,
- on met en forme le mélange ainsi obtenu,
- on effectue un frittage réaction par voie solide dudit mélange mis en forme, moyennant quoi on obtient une Monazite ou un composé de type Monazite.

Cette nouvelle voie de synthèse utilise donc comme réactif de départ essentiel ou réactif intermédiaire, et de manière originale, un métaphosphate de terres rares Lanthanides de formule générale $Ln(PO_3)_3$.

Ce procédé introduit une simplification par rapport aux voies de fabrication habituelles de la Monazite et des composés de la Monazite, telles qu'elles sont décrites dans l'art antérieur, et en particulier dans le document déjà discuté ci-dessus. Cette simplification porte tout d'abord sur la quantité des étapes de synthèse mises en jeu, en effet la phase de synthèse chimique ainsi que la phase de calcination sont supprimées. De ce fait, le procédé selon l'invention ne comprend que trois étapes, qui sont le mélange/broyage, la mise en forme, et le frittage réaction.

Le frittage mis en oeuvre dans le procédé selon l'invention est un frittage réaction par voie solide, c'est-à-dire que ce frittage réaction regroupe à la fois les étapes de réaction des poudres et de transformation en phase monazite ainsi que la densification du matériau. Ainsi la monazite ou le composé de type monazite sont-ils obtenus du fait des réactions se produisant au cours du frittage, alors que dans l'art antérieur une telle réaction n'a pas lieu lors du frittage, et l'on est uniquement en présence d'une simple densification d'un produit déjà présent avant le frittage.

Cette simplification permet en outre de réduire la complexité des étapes mises en oeuvre qui peuvent être réalisées à sec, en milieu solide, ainsi que de supprimer également les caractérisations de la synthèse chimique.

Dans le cas particulier d'une synthèse de la Monazite faisant intervenir des composés radioactifs, qui se présentent en particulier sous la forme de déchets issus de l'industrie nucléaire, le procédé selon l'invention permet de limiter le nombre d'étapes réalisées en milieu radioactif avec des réactifs difficiles à manipuler. D'autre part, le fait de pouvoir réaliser une synthèse par voie solide permet de simplifier le procédé, et aussi de limiter les risques nucléaires liés à la criticité, qui sont en effet plus difficiles à maîtriser lors des étapes mises en oeuvre dans les procédés de l'art antérieur, en particulier lors de la précipitation.

Les trois étapes du procédé selon l'invention sont faciles à mettre en place notamment dans le cadre d'une installation fonctionnant avec des produits actifs, par des technologies céramiques traditionnelles éprouvées, il en résulte qu'une industrialisation à grande échelle du procédé selon l'invention ne présente pas de difficultés particulières.

Le métaphosphate de Lanthanide peut être un composé industriellement disponible, mais selon une forme préférée du procédé selon l'invention, le métaphosphate de Lanthanide peut être synthétisé au cours de ce qui constituera alors la première partie du procédé selon l'invention, la deuxième partie du procédé comprenant la synthèse proprement dite de la Monazite, ou du composé de type Monazite, par mélange du métaphosphate de Lanthanide, en tant que réactif de départ, avec les composés indiqués ci-dessus, et par la succession d'étapes déjà mentionnées plus haut. Cette synthèse du métaphosphate de Lanthanide peut se faire en d'autres lieux et dans d'autres installations et non pas sur le site même de synthèse de la Monazite ou de conditionnement des déchets nucléaires.

Le procédé du conditionnement de déchets nucléaires qui ne fait partie de la présente invention permet de réaliser une grande partie des étapes de l'ensemble du procédé, à savoir la synthèse du métaphosphate de Lanthanide, sans éléments radioactifs, avec des réactifs inertes, et facilement disponibles. Le déchet radioactif n'est incorporé que dans la deuxième partie du procédé. De ce fait, le nombre d'étapes que comprend le procédé de conditionnement de déchets radioactifs en tant que tel est réduit à trois, à savoir mélange/broyage, mise en forme et frittage réaction.

D'autres caractéristiques et avantages de l'invention apparaîtront mieux à la lecture de la description qui suit, donnée bien entendu à titre illustratif et non limitatif, en référence au dessin annexé sur lequel :

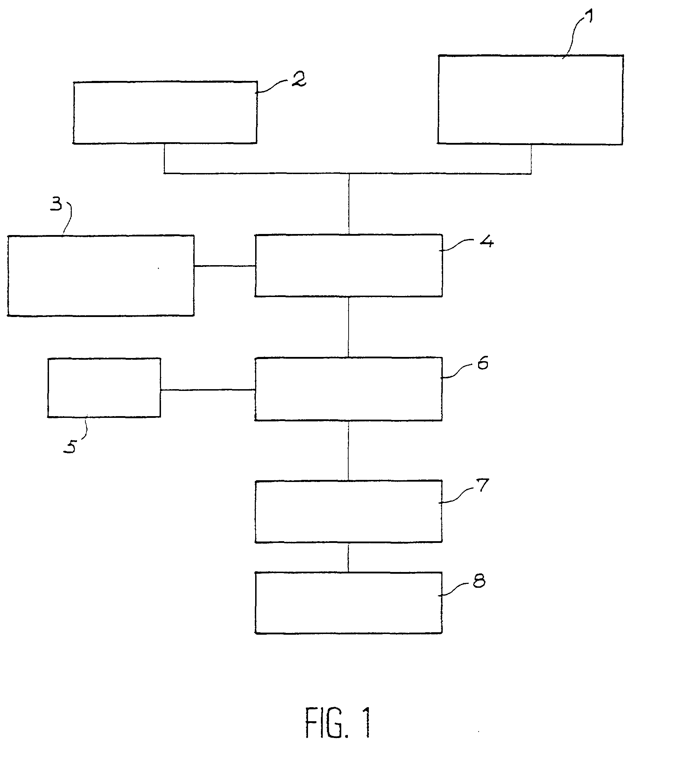

- la figure 1 déjà mentionnée plus haut est un diagramme représentant les étapes du procédé de synthèse de la Monazite décrit dans l'art antérieur représenté par le document de L.A. BOATNER et al. déjà mentionné ci-dessus ;
- la figure 2 est un diagramme représentant les étapes du procédé de fabrication d'une Monazite ou d'un composé de type Monazite conforme à l'invention, selon une forme particulièrement préférée du procédé selon l'invention, comprenant dans une première partie la synthèse d'un métaphosphate de Lanthanide par un procédé comprenant essentiellement deux étapes et une troisième étape optionnelle de broyage,
- les figures 3 à 6 illustrent des blocs de conditionnement de déchets radioactifs obtenus conformément à l'invention, plus précisément :

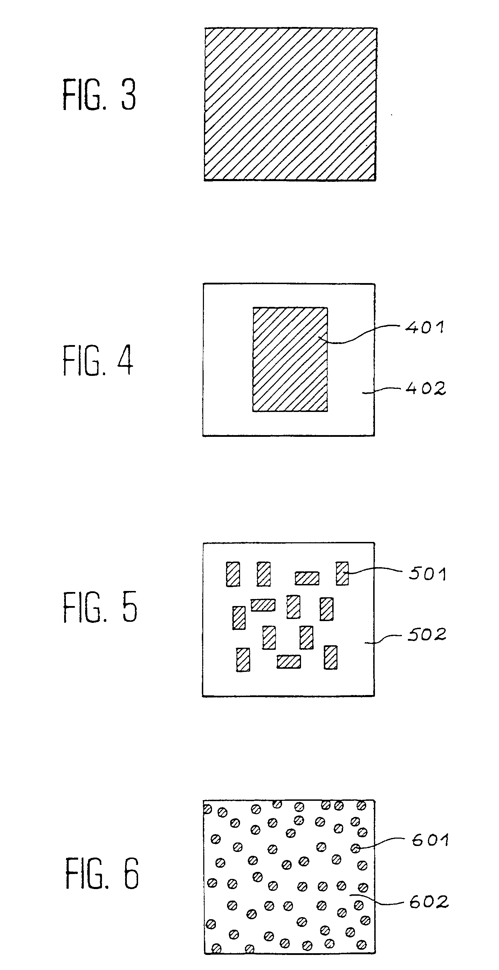

- la figure 3 représente une matrice homogène,
- la figure 4 représente un matériau hétérogène avec un coeur de Monazite dans une matrice inactive,
- la figure 5 représente une matrice hétérogène avec des blocs de Monazite dans une matrice inactive,

- la figure 6 représente une matrice comportant des micro-inclusions de Monazite dans une matrice inactive. Il est bien évident que dans la description, le terme "Monazite" pourra également désigner un composé de type Monazite.

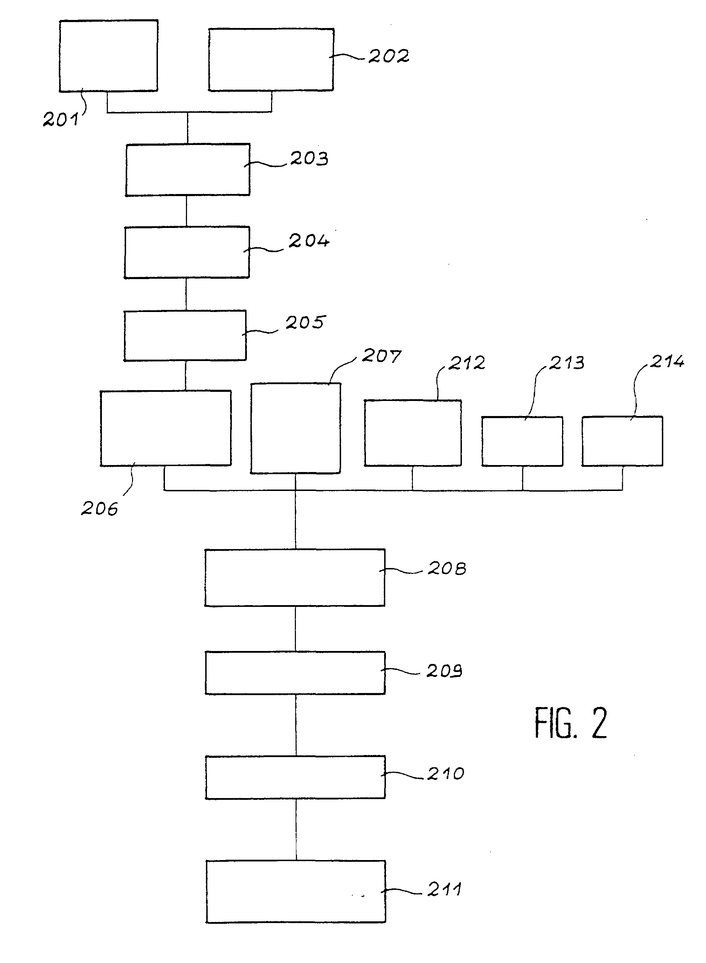

En se reportant à la Figure 2, on constate que le procédé selon l'invention comprend dans sa forme préférée et dans une première partie, la synthèse du composé ou réactif de départ de type métaphosphate de Lanthanide pour la synthèse de la Monazite ou d'un composé de type Monazite. Ce composé intermédiaire ou produit de départ de type métaphosphate de Lanthanide joue un rôle essentiel dans le procédé de synthèse de la Monazite ou d'un composé de type Monazite selon la présente invention.

La synthèse de ce composé intermédiaire ou réactif de départ qui est un métaphosphate (III) de terres rares répondant à la formule générale $Ln(PO_3)_3$ où Ln est un élément de la série des Lanthanides choisi par exemple parmi La, Ce, Pr, Nd, Pn, Sm, Eu, Gd et Tb avec La et Ce étant préférés, a déjà été décrite dans la littérature, en particulier dans le document "Preparation and Properties of Cerium Polyphosphate and Classification of Phosphates", G.A. Bukhalova, I.V. Mardirosova, M. M. Ali - Russian journal of inorganic Chemistry, 33(10), pp. 1438-1440, 1988. Traduit de Zhyrnal Neorganichekoi Khimii, 33, 2511-2514 (1988) où l'on étudie la synthèse du métaphosphate de cérium par des réactions en phase solide.

Cependant, différentes voies de synthèse de ce composé intermédiaire ou réactif de départ sont possibles et la voie de synthèse qui est décrite dans la figure 2 (références 201 à 205) n'est donnée qu'à titre indicatif et d'autres voies de synthèse peuvent être envisagées dans des conditions proches de celles permettant l'obtention de la phase Monazite mais en respectant de préférence un rapport Lanthanide(s)/phosphore proche de 1/3.

De préférence, on effectue tout d'abord le mélange homogène (203) par exemple par broyage d'un sel de Lanthanide inactif (201) choisi par exemple parmi les nitrates, halogénures, carbonates, oxalates et oxydes de Lanthanide, et leurs mélanges, avec un composé phosphaté (202), choisi par exemple parmi l'acide orthophosphorique, l'hydrogénophosphate d'ammonium et leurs mélanges.

Le mélange peut être réalisé dans tout appareil convenable et connu de l'homme du métier. On utilisera toutefois de préférence un broyeur planétaire. Le mélange homogène ainsi obtenu est soumis ensuite éventuellement à un séchage (non représenté), de préférence à une température comprise entre 100°C et 200°C, puis à une opération de calcination (204) à une température de préférence supérieure à 500°C et inférieure à la température de fusion du métaphosphate de Lanthanide que l'on souhaite obtenir. Ainsi, dans le cas du métaphosphate de cérium, la température de calcination devra être inférieure à 1256°C qui est la température de fusion du métaphosphate de cérium.

La calcination est de préférence mise en oeuvre dans un four sous flux d'air, ce qui permet d'entraîner les produits gazeux qui se dégagent, formés essentiellement de $HNO_3$, $NO_x$, $NH_3$......

Le traitement de calcination est suivi de manière facultative, par un broyage à sec (205) du produit obtenu, de préférence dans un broyeur planétaire de manière à obtenir une poudre de granulométrie souhaitée, c'est-à-dire dont la taille des particules est de préférence inférieure à 0,1 mm. Un broyage plus poussé est toujours plus favorable pour la suite du procédé.

On remarquera donc que l'ensemble de ces étapes, par lesquelles est réalisée la synthèse du métaphosphate de Lanthanide qui est un produit inactif (206), ne fait intervenir que des produits eux-mêmes inactifs et peut même être réalisée de manière totalement séparée dans des installations indépendantes.

Conformément au procédé selon l'invention, la Monazite ou le composé de type Monazite est synthétisé par un procédé où l'on utilise le métaphosphate de lanthanide - préparé de préférence comme indiqué ci-dessus dans ce qui peut constituer la première partie de procédé - comme produit de départ pour synthétiser la phase Monazite ou de type Monazite dans ce qui peut alors constituer la deuxième partie du procédé.

Différents composés de structure Monazite peuvent alors être envisagés.

Des compositions solides totales existent entre les pôles purs de terres rares du lanthane au terbium, par exemple entre $CePO_4$ et $LaPO_4$. Au-delà de l'élément terbium et en allant vers les numéros atomiques croissants dans la série des Lanthanides, des solutions solides partielles existent.

Dans le cas des Actinides, il a été aussi démontré que des solutions solides partielles ou totales existaient entre les orthophosphates de Lanthanides et les phosphates d'Actinides. Par exemple, il existe une solution solide totale entre les pôles $CePO_4$ et $Ca_{0,5}U_{0,5}PO_4$. Plusieurs cas peuvent être envisagés pour la synthèse de ces différents composés.

Lorsqu'on souhaite effectuer la synthèse de Monazite contenant des Lanthanides, cette synthèse peut se faire par un procédé comprenant les étapes suivantes, décrites dans la figure 2 ; on réalise tout d'abord le mélange en phase solide (208) du métaphosphate de Lanthanide (206) et de un ou plusieurs oxyde(s) de Lanthanide (207) ou de un ou plusieurs composé(s) susceptible(s) de donner un (ou des) oxyde(s) lors du traitement ultérieur de frittage réaction: il peut s'agir par exemple de carbonates, oxalates, nitrates, halogénures, de préférence chlorures, etc. Le mélange du métaphosphate de Lanthanide inactifs (206) avec un ou plusieurs oxyde(s) de Lanthanide (207) doit de préférence être fait de manière à respecter un rapport Lanthane/Phosphore voisin de 1. Le mélange-broyage en phase solide (208) est généralement réalisé par voie sèche dans un broyeur à boulets ou par tout autre moyen de mélange en partant des poudres de réactifs, par exemple de métaphosphate et d'oxyde(s) de Lanthanide d'une granulométrie de préférence inférieure à 500 micromètres (μm) de préférence encore comprise entre 50 et 200 μm.

Le mélange homogène des deux poudres ainsi obtenu est alors mis en forme (209), de préférence pressé, par exemple dans une presse à pastiller ou une presse à granuler pour en faire par exemple des comprimés cylindriques, à une pression de préférence au moins égale à 50 MPa (500 bars), de préférence comprise entre 50 MPa et 150 MPa (500 et 1500 bars) par exemple de 100 MPa (1000 bars).

Les produits mis en forme, de préférence pressés, sont alors portés dans un four de frittage réaction (210) pour y être densifiés. Ce frittage réaction peut être un frittage naturel qui, effectué dans des conditions optimales, permet une densification du matériau jusqu'à 95 % de la densité théorique sans pression, ou bien un frittage réaction sous charge à une pression de préférence de 100 à 500 MPa qui permet d'améliorer la densité finale du produit, la texture du matériau et d'abaisser la température de frittage. L'atmosphère lors du frittage réaction peut être neutre, par exemple sous argon, réductrice, par exemple sous mélange Argon et Hydrogène à 5 %, ou bien encore oxydante, par exemple sous air.

La température du palier de frittage réaction peut être de préférence d'au moins 1000°C et de préférence comprise entre 1200°C et 1400°C et la durée du frittage réaction doit de préférence être comprise entre 30 secondes et 4 heures.

La réaction de formation de la phase Monazite finale incluant des Lanthanides (211) se produit lors du traitement thermique de frittage réaction (210) et peut s'écrire ainsi de manière générale dans le cas des oxydes de Lanthanide Ln(III) : :

$$Ln(PO_3)_3 + Ln_2O_3 \rightarrow 3\ LnPO_4$$

La réaction équivalente a également lieu avec les oxydes de Lanthanide Ln (IV) de type $LnO_2$, et peut s'écrire de manière générale :

$$Ln(PO_3)_3 + 2LnO_2 \rightarrow 3\ LnPO_4 + \tfrac{1}{2}\ O_2$$

dans laquelle Ln représente de préférence le cérium.

Dans ce cas, un départ d'oxygène est observé lors de la formation de la phase Monazite.

Cette réaction peut s'écrire de la même façon pour tous les oxydes de Lanthanide et peut également être écrite pour des mélanges de Lanthanide(s). Il en va de même pour le type de métaphosphate de Lanthanide.

La réaction générale mise en jeu lors du traitement de frittage sera alors la suivante dans le cas des oxydes de Lanthanide Ln'(III) :

$$Ln(PO_3)_3 + Ln'_2O_3 \rightarrow 3(Ln_{1/3}\ Ln'_{2/3})PO_4$$

Ln et Ln' étant des éléments de la série des Lanthanides et Ln et Ln' représentant des Lanthanides différents.

De même, et de manière analogue à ce que l'on a déjà mentionné ci-dessous, on peut écrire, dans le cas des oxydes de Lanthanide Ln'(IV) de type $Ln'O_2$ la réaction suivante :

$$Ln(PO_3)_3 + 2Ln'O_2 \rightarrow 3(Ln_{1/3}\ Ln'_{2/3})\ PO_4 + \tfrac{1}{2}\ O_2$$

La formule générale des monazites préparées sera donc $Ln_xLn'_{(1-x)}\ PO_4$ avec x variant de 0 à 1.

Les réactions décrites ci-dessus avec des oxydes peuvent être également réalisées avec des composés susceptibles de donner des oxydes lors du traitement thermique de frittage, il peut s'agir par exemple d'oxalates, de carbonates, de nitrates ou encore d'halogénures, en particulier de chlorures, ou de tout autre réactif donnant un oxyde au cours du traitement thermique de frittage réaction, c'est-à-dire par exemple à partir de 900°C et généralement à une température comprise entre 1000 et 1400°C.

Le Lanthanide que l'on fait réagir sous forme d'oxyde peut être un radioélément, mais il peut s'agir aussi d'un élément inerte. De ce fait, la monazite obtenue sera soit inerte, soit active.

Lorsque l'on souhaite effectuer la synthèse de Monazite contenant des Actinides, le procédé mis en oeuvre est sensiblement le même que celui précédemment décrit pour les Lanthanides et comporte les mêmes étapes essentielles (208 à 210). En effet, dans les réactions décrites ci-dessus, les oxydes de Lanthanides peuvent être également remplacés par des oxydes d'Actinides (212) ou par des composés susceptibles de donner des oxydes lors du traitement ultérieur de frittage réaction. Cependant, les Actinides possèdent un grand nombre de valences possibles et deux cas principaux sont à envisager.

1. L'Actinide (212) considéré, désigné par Ac, est stable sous valence (III) dans la structure Monazite, ce qui est le cas des éléments Am, Cm par exemple ou encore du plutonium.

Il suffit alors simplement de remplacer l'oxyde de Lanthanide cité ci-dessus par un oxyde d'Actinide. Comme il s'agit d'une large famille de solutions solides, on peut procéder avec des mélanges mixtes de Lanthanides, par exemple du lanthane au terbium, et avec différents Actinides, ou même avec des mélanges mixtes Lanthanides et Actinides.

Les réactions générales mises en jeu sont les suivantes :

$$Ln(PO_3)_3 + 2AcO_2 \rightarrow 3 (Ln_{1/3} Ac_{2/3}) PO_4 + \frac{1}{2} O_2,$$

ou encore

$$Ln(PO_3)_3 + Ac_2O_3 \rightarrow (Ln_{1/3} Ac_{2/3}) PO_4.$$

Un ajout d'oxyde de terre rare complémentaire permet de faire varier la teneur en actinide et de préparer toutes les solutions solides possibles
et les monazites obtenues répondent à la formule générale suivante :

$$(Ln_x Ac_{(1-x)}) PO_4,$$

x variant de 0 à 1.

2. L'Actinide est considéré comme stable sous la valence IV dans la structure Monazite, ce qui est le cas par exemple des éléments tels que Th, Pa, U, Np, Pu que l'on désigne dans ce qui suit par Ac.

Pour faire rentrer l'élément Actinide dans la structure cristalline, deux possibilités sont offertes :

- on peut ajouter dans la formulation un élément bivalent, choisi pour assurer la compensation de charge et la neutralité électronique globale de la structure. Cet élément doit avoir une taille ionique compatible avec le site des Lanthanides dans la structure Monazite. Il s'agit par exemple du calcium ou bien du plomb. Ce réactif est introduit dans l'étape de mélange (208) sous la forme de poudre d'oxyde (213) ou bien encore sous la forme d'un composé susceptible de donner un oxyde. Les réactions générales mises en jeu dans ce cas, par exemple avec le calcium, sont les suivantes :

$$Ln(PO_3)_3 + AcO_2 + CaO \rightarrow 3 (Ln_{1/3} Ac_{1/3} Ca_{1/3})PO_4.$$

Un ajout d'oxyde de terre rare complémentaire permet de faire varier la teneur en actinide et de préparer toutes les solutions solides possibles
et les monazites obtenues répondent à la formule générale suivante

$$(Ln_{(1-2x)} Ac_x Ca_x) PO_4,$$

x étant compris entre 0 et 1/2

- ou bien on peut ajouter un groupement oxyde tétravalent qui se substitue au groupement $PO_4^{3-}$ et qui peut être notamment un groupement $SiO_4^{4-}$ introduit par exemple sous forme de silice (214) lors de l'étape de mélange (208).

La réaction générale mise en jeu dans ce cas avec la silice, et qui a lieu pendant le traitement thermique de frittage réaction est la suivante :

$$(1-x) Ln (PO_3)_3 + 2(1-x) LnO_2 + 3xAcO_2 + 3xSiO_2$$

$$\rightarrow 3\, Ln_{1-x}Ac_x(SiO_4)_xPO_{4\,(1-x)} + \frac{1-x}{2}\,O_2,$$

x étant compris entre 0 et 1 et le composé obtenu est un composé de type Monazite répondant à la formule générale ci-dessous, dans le cas de la silice :

$$L_{n(1-x)}Ac_x(SiO_4)_xPO_{4(1-x)},$$

qui peut être généralisée pour tout oxyde tétravalent.

De même que pour les Lanthanides, les réactions décrites ici avec des oxydes d'Actinides peuvent aussi être réalisées avec des composés susceptibles de donner des oxydes lors du traitement thermique de frittage. Il peut s'agir de nitrates, de carbonates, d'oxalates, d'halogénures en particulier de chlorures ou de tout autre réactif donnant au cours du traitement thermique, un oxyde à partir par exemple de 900-1000°C.

3. Il faut enfin signaler que dans les conditions particulièrement réductrices, certains Actinides normalement de valence IV peuvent cependant être incorporés en faible proportion, c'est-à-dire par exemple jusqu'à 10 % dans la structure, sous valence III. C'est le cas par exemple de l'Uranium ou du Plutonium.

La compensation de charge n'est plus nécessaire alors et on est ramené au cas précédent.

Dans un cas plus général, les monazites obtenues répondent à la formule suivante, dans le cas où la compensation de charge est assurée par le calcium

$$(Ln_{(1-2x-y)}\,Ac_y^{III}\,Ac_x^{IV}\,Ca_x)PO_4$$

avec $AC^{III}$ représentant un actinide à la valence 3*

$Ac^{IV}$ représentant un actinide à la valence 4* et Ln représentant un élément de la série des lanthanides.

Les monazites obtenues dans le cas où la compensation de charge est faite par ajout de silice répondent à la formule suivante :

$$Ln_{(1-2y)}\,Ac_y^{III}\,Ac_x^{IV})PO_{4(1-x)}SiO_{4x}$$

où les symboles ont la même signification que ci-dessus.

Une solution mixte est toujours possible donnant alors une formule générale de type :

$$L\,n\,_{(1-x-y-t)}\,A\,c\,_y^{III}\,A\,c\,_x^{IV}\,Ca_t)\,(PO_4)_{1-z}(SiO_4)\,_z$$

avec dans ce cas x, y, z, t < 1 et z = x-t

Enfin, la formule précédente peut encore être généralisée sous la forme :

$$Ln_{(1-x-y-t)}\,Ac_y^{III}\,Ac_x^{IV}\,X_t)\,(PO_4)_{1-z}\,(Y)_z$$

avec

Ln : Elément de la série des lanthanides
$AC^{III}$ : Actinide trivalent
$Ac^{IV}$ : Actinide tétravalent
X : Elément bivalent pour compensation de charge pouvant être par exemple Ca, Pb, ...
Y : Elément ou groupe d'élément tétravalent pour compensation de charge pouvant être par exemple $SiO_4^{4-}$

Selon l'invention, les Monazites préparées par le procédé décrit ci-dessus peuvent être inertes, mais comprennent de préférence dans leur structure chimique des éléments actifs tels que Lanthanides et Actinides qui font par exemple partie de déchets radioactifs issus de diverses origines, par exemple du retraitement du combustible nucléaire

Les Monazites préparées par le procédé ci-dessus, qu'elles soient inertes ou qu'elles incorporent des éléments actifs peuvent être utilisées comme matrice de confinement pour incorporer des déchets radioactifs, en particulier des déchets radioactifs à vie longue comme les actinides.

Autrement dit, la matrice de monazite peut être formée d'éléments non actifs et être utilisée seulement comme matrice d'enrobage de déchets radioactifs, ou elle peut comprendre dans sa structure chimique les éléments actifs du déchet tels que les lanthanides et/ou les actinides. En effet, les Monazites présentent toutes les qualités requises pour les matériaux utilisés comme matrice de confinement : à savoir stabilité chimique, stabilité aux rayonnements et stabilité à la température très élevées, pour isoler les éléments radioactifs de l'environnement et les maintenir dans cet état isolé pendant des durées très longues, en raison de leur période radioactive. Selon l'invention, la matrice de monazite peut être formée d'éléments non actifs et être utilisée uniquement comme matrice d'enrobage d'un déchet radioactif ou elle peut comprendre dans sa structure chimique les éléments actifs du déchet tels que les lanthanides et les actinides.

Lorsqu'on incorpore directement les éléments radioactifs dans la structure chimique de la monazite, on peut de plus disposer autour de cetre monazite contenant les lanthanides et/ou les actinides à conditionner, au moins une couche de Monazite non active et éventuellement d'autres couches de Monazite de composition différente, de manière à constituer des barrières successives appropriées entre le déchet actif et l'environnement.

De même, on peut disposer une ou plusieurs couches de Monazite de composition différente autour de déchets entourés d'une première couche de Monazite non active.

Dans les deux cas, les couches les plus internes sont de préférence choisies pour résister aux dégâts d'irradiation, et les couches les plus externes peuvent être choisies pour résister aux agressions du milieu extérieur. L'homme du métier pourra sans problème choisir les couches, de manière à communiquer à l'ensemble les propriétés, notamment les propriétés mécaniques, voulues.

Les Monazites ou les composés de type Monazite peuvent donc être utilisées comme matériau formant matrice de confinement de déchets radioactifs riches en Lanthanides et en Actinides et constituer un bloc de conditionnement de déchets radioactifs qui peut prendre diverses formes.

Sur la figure 3, le bloc de Monazite incorporant les différents radioéléments est homogène en composition. Les éléments radioactifs sont alors incorporés en solution solide dans la structure même du minéral, c'est-à-dire dans la Monazite.

Sur la figure 4, le bloc est hétérogène et comporte un coeur en Monazite (401) incorporant les déchets radioactifs et une couche périphérique inactive (402) en Monazite ou en un tout autre matériau ayant une résistance importante aux agressions extérieures, par exemple un verre ou un béton.

Sur la figure 5, le bloc est hétérogène et est constitué d'inclusions, par exemple d'une taille de 1 à 50 mm de Monazite incorporant des déchets radioactifs (501) dans une matrice inactive (502) de Monazite ou d'un composé phosphaté compatible avec la Monazite ou d'un autre matériau résistant aux agressions extérieures, par exemple un verre ou un béton.

Sur la figure 6, le bloc est hétérogène et est constitué de micro-inclusions par exemple d'une taille de 0,5 à 1000 $\mu$m de Monazite incorporant des déchets nucléaires (601) dans une matrice de Monazite (602) inactive ou de tout autre matériau résistant aux agressions extérieures, par exemple un composé phosphaté compatible avec la Monazite, ou bien encore un verre ou un béton.

Les différents colis ou blocs hétérogènes sont élaborés par mélange. Le mélange de métaphosphate avec par exemple l'oxyde de Lanthanide est fait d'une part, puis celui avec la matrice inerte d'autre part. Par exemple, après l'étape mélange en phase solide, la poudre est granulée par un équipement approprié tel qu'une presse à granuler, puis ces granulés sont incorporés dans une matrice inactive pulvérulente constituée par exemple d'un composé phosphaté compatible avec la Monazite, ou alors de verre ou de béton. Après un compactage de l'ensemble dans un réfractaire, la pièce est portée au four pour l'étape de frittage réaction. Après frittage réaction, le colis ou bloc obtenu est du type représenté sur la figure 3.

Les exemples donnés ci-après illustrent le procédé de préparation de Monazite conformément a l'invention ainsi que le procédé de conditionnement de déchets radioactifs selon l'invention.

### Exemple 1 : Préparation du métaphosphate de cérium (III)

On prépare du métaphosphate de cérium (III) en suivant le mode opératoire suivant :

On mélange dans un broyeur planétaire du nitrate de cérium pur et de l'acide orthophosphorique pur dans le rapport molaire Ce/P de 1/3.

On effectue ensuite un séchage à une température de 110°C, puis une calcination en four sous air à une température de 500°C.

Le produit obtenu est broyé à sec dans un broyeur planétaire, de manière à obtenir une poudre dont les particules ont une granulométrie de l'ordre de 100 $\mu$m.

**Exemple 2 : Synthèse de Monazite contenant du Cérium**

Au métaphosphate de cérium préparé dans l'Exemple 1, on ajoute de l'oxyde de cérium (III) Ce O de manière à respecter le rapport Ce/P=1. On effectue ensuite un mélange intime des deux constituants par mélange dans un broyeur planétaire pendant trente minutes.

La poudre obtenue est alors pressée sous forme de composés cylindriques à une pression de 100 MPa, puis frittée à une température de 1400°C pendant une heure.

La réaction globale de synthèse qui intervient pendant le traitement thermique de frittage réaction peut s'écrire :

$$Ce(PO_3)_3 + Ce_2O_3 \rightarrow 3\ CePO_4.$$

La réaction équivalente a lieu avec l'oxyde de cérium (IV) $CeO_2$ avec toutefois un départ d'oxygène lors de la formation de la phase Monazite.

**Exemple 3 : Synthèse de Monazite contenant de l'Uranium et préparation de blocs homogènes de Monazite.**

L'Uranium est stable dans la structure Monazite sous valence (IV). Le calcium est choisi comme élément bivalent pour compensation de charge. En effet, son rayon ionique reste proche de celui des terres rares. Sa taille est donc compatible avec le site d'accueil dans la structure Monazite. Il est ajouté à la formulation pendant l'étape de mélange.

La réaction globale qui prend place pendant le traitement thermique est la suivante :

$$Ce\ (PO_3)_3 + 3xUO_2 + 3xCaO + (1-3x)Ce_2O_3 \rightarrow 3Ce_{(2-2x)}U_xCa_xPO_4$$

Dans cet exemple, on prépare des blocs homogènes de Monazite contenant 10 % d'uranium.

La synthèse est réalisée selon le schéma indiqué ci-dessus, de manière à obtenir un produit de formulation $(Ce_{0,8}Ca_{0,1}U_{0,1})\ PO_4$.

Le métaphosphate de cérium, le carbonate de calcium et l'oxyde d'uranium ($U_3O_8$) sont mélangés ensemble en une seule fois dans un bol de 50 ml d'un broyeur planétaire.

Les constituants, une fois mélangés sont pastillés sous 50 MPa dans une matrice cylindrique. Les comprimés ont une taille de l'ordre du centimètre.

Les comprimés sont alors enfournés dans un four suivant un cycle thermique permettant d'atteindre un palier d'une heure à 1400°C. Les blocs ainsi élaborés sont homogènes en composition. La taille des blocs ne dépend que de la taille de la matrice de pressage.

La porosité finale des produits est de l'ordre de 10 %.

**Exemple 4 : Fabrication de blocs hétérogènes**

Les petits blocs de l'exemple précédent peuvent être ainsi placés dans un conteneur, et enrobés dans un coulis de ciment.

Les blocs étant de densité importante ($d \simeq 5g/cm^3$), ils ne remontent pas lors du coulage du ciment.

Après la prise hydraulique, l'ensemble forme un bloc hétérogène.

**Revendications**

1.  Procédé de fabrication de Monazite ou de composés de type Monazite, **caractérisé en ce que** l'on mélange en phase solide des réactifs comprenant un composé de type métaphosphate de Lanthanide inactif de formule Ln $(PO_3)_3$ et un ou plusieurs oxyde(s) de Lanthanide et/ou un ou plusieurs oxyde(s) d'Actinide ; et/ou un ou plusieurs composé(s) susceptible(s) de donner cet ou ces oxyde(s) lors du traitement thermique de frittage réaction ; on met en forme le mélange ainsi obtenu, et on effectue un frittage réaction par voie solide dudit mélange mis en forme, moyennant quoi on obtient une Monazite ou un composé de type Monazite.

2.  Procédé selon la revendication 1, **caractérisé en ce que** le métaphosphate de Lanthanide inactif est préparé par mélange homogène d'un sel de Lanthanide inactif et d'un composé phosphaté et calcination du mélange ainsi obtenu.

3. Procédé selon la revendication 2, **caractérisé en ce que** le sel de Lanthanide est choisi parmi les nitrates, halogénures, carbonates, oxalates et oxydes de lanthanide et leurs mélanges.

4. Procédé selon la revendication 2, **caractérisé en ce que** le composé phosphaté est choisi parmi l'acide orthophosphorique, l'hydrogénophosphate d'ammonium et leurs mélanges.

5. Procédé selon la revendication 2, **caractérisé en ce que** le produit calciné obtenu est en outre broyé afin d'obtenir une poudre de granulométrie adéquate.

6. Procédé selon la revendication 1, **caractérisé en ce que** le mélange en phase solide est réalisé par broyage des poudres des réactifs.

7. Procédé selon la revendication 1, **caractérisé en ce que** la mise en forme consiste en un pressage pour mettre le mélange sous la forme de comprimés cylindriques.

8. Procédé selon la revendication 1, **caractérisé en ce que** le frittage réaction avec ou sans pression, est réalisé avec un palier de frittage d'au moins 1000°C.

9. Procédé selon la revendication 1, **caractérisé en ce que** les réactifs comprennent un Actinide considéré comme stable sous la valence IV, dans la structure monazite sous forme d'oxyde ou d'un composé susceptible de donner cet oxyde, et comprennent en outre un oxyde d'un élément bivalent ou un composé susceptible de donner cet oxyde d'un élément bivalent, cet élément bivalent étant choisi pour assurer la compensation de charge dans la Monazite.

10. Procédé selon la revendication 9, **caractérisé en ce que** l'élément bivalent est choisi parmi le calcium et le plomb.

11. Procédé selon la revendication 1, **caractérisé en ce que** les réactifs comprennent un Actinide considéré comme stable sous la valente IV dans la structure monazite, sous forme d'oxyde ou d'un composé susceptible de donner cet oxyde, et comprennent en outre un oxyde susceptible de fournir un groupement tétravalent se substituant au groupement $PO_4^{3-}$ dans la Monazite.

12. Procédé selon la revendication 11, **caractérisé en ce que** l'oxyde susceptible de fournir un groupement tétravalent est la silice.

13. Procédé selon la revendication 1, **caractérisé en ce que** les Lanthanides et/ou les Actinides font partie de déchets radioactifs.

**Patentansprüche**

1. Verfahren zur Herstellung von Monazit oder Zusammensetzungen des Typs Monazit,
   **dadurch gekennzeichnet,**
   **dass** man in fester Phase Reagenzien mischt, die eine Zusammensetzung des Typs inaktives Lanthanoid-Metaphosphat der Formel $Ln(PO_3)_3$ und ein oder mehrere Lanthanoidoxid(e) und/oder ein oder mehrere Actinoidoxid(e) umfassen; und/oder ein oder mehrere Zusammensetzungen, die geeignet bzw. fähig sind, während der Sinter-Wärmebehandlung mit diesem oder diesen Oxid(en) zu reagieren; dass man die so erhaltene Mischung formt und ein Reaktionssintern der genannten geformten Mischung in fester Form durchführt, wodurch man ein Monazit oder eine Zusammensetzung des Typs Monazit erhält.

2. Verfahren nach Anspruch 1, **dadurch gekennzeichnet, dass** das inaktive Lanthanoid-Metaphosphat hergestellt wird durch homogenes Mischen von inaktivem Lanthanoidsalz und einer phosphatierten Zusammensetzung sowie Kalzinieren der so erhaltenen Mischung.

3. Verfahren nach Anspruch 2, **dadurch gekennzeichnet, dass** das Lanthanoidsalz ausgewählt wird unter den Nitraten, Haloiden, Carbonaten, Oxalaten und Lanthanoidoxiden und ihren Mischungen,

**EP 0 862 542 B1**

**4.** Verfahren nach Anspruch 2, **dadurch gekennzeichnet, dass** die phosphatierte Zusammensetzung ausgewählt wird unter Orthophosphorsäure, Ammoniumhydrogenphosphat und ihren Mischungen.

**5.** Verfahren nach Anspruch 2, **dadurch gekennzeichnet, dass** das erhaltene kalzinierte Produkt außerdem fein vermahlen wird, um ein Pulver von adäquater Granulometrie herzustellen.

**6.** Verfahren nach Anspruch 1, **dadurch gekennzeichnet, dass** das Mischen in fester Phase durch Vermahlen der Pulver der Reagenzien erfolgt.

**7.** Verfahren nach Anspruch 1, **dadurch gekennzeichnet, dass** das Formen aus einem Pressen besteht, um die Mischung in die Form von zylindrischen Presslingen zu bringen.

**8.** Verfahren nach Anspruch 1, **dadurch gekennzeichnet, dass** das Reaktionssintern mit oder ohne Druck mit einer Sinterstufe von wenigstens 1000°C erfolgt.

**9.** Verfahren nach Anspruch 1, **dadurch gekennzeichnet, dass** die Reagenzien ein in der Monazitstruktur in Form von Oxid oder einer Zusammensetzung, fähig dieses Oxid zu liefern, unter der Wertigkkeit IV bzw. Vierwertigkeit stabiles Actinoid umfassen, und außerdem ein Oxid eines bivalenten Elements oder eine Zusammensetzung umfassen, fähig dieses bivalente Element zu liefern, wobei dieses bivalente Element gewählt wird, um die Chargenkompensation in dem Monazit sicherzustellen.

**10.** Verfahren nach Anspruch 9, **dadurch gekennzeichnet, dass** das bivalente Element zwischen Kalzium und Blei gewählt wird.

**11.** Verfahren nach Anspruch 1, **dadurch gekennzeichnet dass** die Reagenzien ein in der Monazitstruktur in Form von Oxid oder einer Zusammensetzung, fähig dieses Oxid zu liefern, unter der Wertigkeit IV bzw. Vierwertigkeit stabiles Actinoid umfassen, und außerdem ein Oxid umfassen, das fähig ist, eine tetravalente Gruppierung zu liefern, die die $PO_4^{3-}$ Gruppierung in dem Monazit ersetzt.

**12.** Verfahren nach Anspruch 11, **dadurch gekennzeichnet, dass** das Oxid, das fähig ist, eine tetravalente Gruppierung zu liefern, Siliciumdioxid ist.

**13.** Verfahren nach Anspruch 1, **dadurch gekennzeichnet, dass** die Lanthanoide und/oder die Actinoide Teile radioaktiver Abfällen sind.

**Claims**

**1.** A method of manufacturing Monazite or Monazite type compounds, **characterised in that** one mixes, in the solid phase, reactants comprising an inactive lanthanide metaphosphate type compound of formula $Ln(PO_3)_3$ and one or more lanthanide oxides and/or one or more actinide oxides and/or one or more compounds capable of giving this or these oxides during a reaction sintering heat treatment ; the mixture thus obtained is shaped and a reaction sintering of said shaped mixture is carried out by a solid route as a result of which a Monazite or a Monazite type compound is obtained.

**2.** A method according to Claim 1, **characterised in that** the inactive lanthanide metaphosphate is prepared by the homogeneous mixing of an inactive lanthanide salt and a phosphate compound and the calcination of the mixture thus obtained.

**3.** A method according to Claim 2, **characterised in that** the lanthanide salt is chosen from among the lanthanide nitrates, halides, carbonates, oxalates and oxides and their mixtures.

**4.** A method according to Claim 2, **characterised in that** the phosphate compound is chosen from among orthophosphoric acid, ammonium hydrogenphosphate and their mixtures.

**5.** A method according to Claim 2, **characterised in that** the calcined product obtained is, in addition, milled so as to obtain a powder of suitable particle size.

6. A method according to Claim 1, **characterised in that** the solid phase mixture is produced by milling the reactant powders.

7. A method according to claim 1, **characterized in that** the shaping consists of pressing in order to form the mixture into cylindrical tablets.

8. A method according to claim 1, **characterized in that** the reaction sintering with or without pressure, is carried out with a sintering support at about 1000°C.

9. A method according to claim 1, **characterized in that** the reactants include an actinide considered to be stable with a valency of IV in the monazite structure in the form of an oxide or a compound capable of giving this oxide, and include, in addition, an oxide of a bivalent element or a compound capable of giving this oxide of a bivalent element, this bivalent element being chosen to provide the charge compensation in the monazite.

10. A method according to claim 9, **characterized in that** the bivalent element is chosen from among calcium and lead.

11. A method according to claim 1, **characterized in that** the reactants include an actinide considered to be stable with a valency of IV in the monazite structure in the form of an oxide or a compound capable of giving this oxide, and include, in addition, an oxide capable of providing a tetravalent group which substitutes for the $PO_4^{3-}$ group in the monazite.

12. A method according to claim 11, **characterized in that** the oxide capable of supplying a tetravalent group is silica.

13. A method according to claim 1, **characterized in that** the lanthanides and/or the actinides form part of radioactive waste.

FIG. 1

FIG. 2

FIG. 3

FIG. 4

401

402

FIG. 5

501

502

FIG. 6

601

602